Europäisches Patentamt

European Patent Office

Office européen des brevets

(11) Publication number: **0 021 767**
**B1**

(12) **EUROPEAN PATENT SPECIFICATION**

(45) Date of publication of patent specification: **13.04.83**

(51) Int. Cl.³: **C 09 K 3/00**

(21) Application number: **80302025.4**

(22) Date of filing: **16.06.80**

(54) **Wall paper stripping composition, a method of making a stripping solution and a method of stripping a wall covering.**

(30) Priority: **15.06.79 GB 7920890**

(43) Date of publication of application:
**07.01.81 Bulletin 81/1**

(45) Publication of the grant of the patent:
**13.04.83 Bulletin 83/15**

(84) Designated Contracting States:
**AT BE CH DE FR IT LI LU NL SE**

(56) References cited:
**DE - A - 1 806 026**
**FR - A - 1 364 575**

(73) Proprietor: **Kelly, Robinson**
**Hamilton Grove Oubas Hill**
**Ulverston Cumbria (GB)**

(72) Inventor: **Kelly, Robinson**
**Hamilton Grove Oubas Hill**
**Ulverston Cumbria (GB)**

(74) Representative: **Warden, John Christopher et al,**
**R.G.C. Jenkins & Co. 12-15, Fetter Lane**
**London EC4A 1PL (GB)**

Courier Press, Leamington Spa, England.

Wall paper stripping composition, a method of making a stripping solution and a method of stripping a wall covering

This invention relates to a composition for stripping washable or emulsion overpainted woodchip or anaglypta wallpapers or embossed wallcoverings.

Wall papers of the above type are particularly difficult to strip since they are impervious to conventional aqueous stripping solutions which run off the surface of the wall covering rather than soaking in to loosen it from the wall. This is because the conventional strippers, which typically comprise a water-soluble detergent and/or solvent for the wallpaper paste, form aqueous solutions which can soak through ordinary fibrous wallpaper to dissolve the paste underneath it but cannot soak through the water-resistant outer layer of a wall covering of the type mentioned above.

West German Specification DE.A1806026 discloses a stripping composition for emulsion painted wallpapers which comprises 30—90% water, 5—60% of a solvent for the emulsion paint such as methylene chloride, 0.5 to 20% of an emulsifier such as a sodium alkyphenol polyglycolether sulphate, 0.5 to 5% of a thickness such as methylcellulose and 0.1 to 3% of paraffin wax. The present invention provides a greatly simplified composition which can be supplied in dry powder form.

The present invention provides in one aspect a composition comprising a dry mixture miscible with water to form a wall paper stripping solution, characterised in that it comprises 3 to 5 wt. parts of sodium sesquicarbonate and 2 to 3.5 wt. parts of starch. In a further aspect, the invention provides an aqueous solution of the above components for use as a stripping solution.

The composition reacts with the water-resistant outer layer to loosen it from the paper, allowing a subsequent application of hot water to soak through and loosen the paper from the wall.

The starch and sodium sesquicarbonate are preferably provided in a powdery, granular or crystalline form. Any commercially available starch can be used, for example that sold under the trade mark "Farina".

The sodium sesquicarbonate and starch are preferably used in a weight ratio of 3:2.

In another aspect, the invention provides a method of making a stripping solution for wall paper which comprises mixing 3 to 5 weight parts of sodium sesquicarbonate and 2 to 3.5 weight parts of starch, 3 to 6 weight parts of luke warm water, the latter being added slowly to give a smooth paste, and quickly adding 25 to 40 weight parts of boiling water, stirring briskly.

A suitable batch of the solution for use by one person comprises approximately 0.5 kilograms of sodium sesquicarbonate, 0.35 kilograms of starch, 0.6 litres of luke warm water to mix the paste and 4 litres of boiling water to complete the solution.

To strip the wall covering, the surface to be stripped is painted with a liberal coating of the freshly made hot solution which is left to soak for 2 to 3 hours. One wall at a time is then soaked with hot water and stripped.

A longer soaking period or a second coating of the solution may be necessary for removing particularly difficult papers or where two or more wall papers have been applied.

The solution of the invention is also particularly suitable for stripping ceilings lined with emulsion-painted papers.

Suitable precautions should be taken to protect the eyes and skin from splashing with the solution and also to cover carpets and furnishings which cannot be removed from the stripping area.

The two dry components of the stripping composition can be sold as a mixture, so that the user has only to add luke warm and boiling water as instructed.

## Claims

1. A composition comprising a dry mixture miscible with water to form a wall paper stripping solution, characterised in that it comprises 3 to 5 wt. parts of sodium sesquicarbonate and 2 to 3.5 wt. parts of starch.

2. A composition according to claim 1 characterised in that the starch and the sodium sesquicarbonate are in powdery, granular or crystalline form.

3. A composition according to claim 1 or claim 2 characterised in that the sodium sesquicarbonate and the starch are present in a weight ratio of 3:2.

4. A wall paper stripping solution which comprises an aqueous solution of a composition according to any preceding claim.

5. A method of making a stripping solution for wall paper which comprises mixing 3 to 5 wt. parts of sodium sesquicarbonate and 2 to 3.5 wt. parts of starch, slowly adding 3 to 6 wt. parts of luke warm water and mixing to a smooth paste, quickly adding 25 to 40 wt. parts of boiling water and stirring briskly.

6. A method of stripping a wall covering which comprises painting onto the wall covering a freshly made hot solution according to claim 5, leaving the coating to soak for 2 to 3 hours, soaking the wall covering with hot water and stripping off the covering.

## Revendications

1. Composition comprenant un mélange sec miscible avec l'eau pour former une solution d''arrachage de papier mural, caractérisée en ce qu'elle comprend 3 à 5 parties en poids de

2

sesquicarbonate de sodium et 2 à 3,5 parties en poids d'amidon.

2. Composition selon la revendication 1, caractérisée en ce que l'amidon et le sesquicarbonate de sodium sont sous une forme pulvérulente, granulaire ou cristalline.

3. Composition selon la revendication 1 ou 2, caractérisée en ce que le sesquicarbonate de sodium et l'amidon sont présents en un rapport pondéral de 3:2.

4. Solution d'arrachage du papier mural qui comprend une solution aqueuse d'une composition selon l'une quelconque des revendications précédentes.

5. Procédé de production d'une solution d'arrachage de papier mural, caractérisé en ce qu'il consiste à mélanger 3 à 5 parties en poids de sesquicarbonate de sodium et 2 à 3,5 parties en poids d'amidon, à ajouter lentement 3 à 6 parties en poids d'eau tiède et à mélanger en une pâte uniforme, à ajouter rapidement 25 à 50 parties en poids d'eau bouillante et à agiter violemment.

6. Procédé d'arrachage d'un revêtement mural caractérisé en ce qu'il consiste à appliquer comme une peinture sur le revêtement mural une solution chaude fraîchement préparée selon la revendication 5, à laisser le revêtement tremper pendant 2 à 3 heures, à tremper le revêtement mural avec de l'eau chaude et à arracher ce revêtement.

## Patentansprüche

1. Zusammensetzung, bestehend aus einer trockenen Mischung, die unter Bildung einer Tapetenpapier-Ablöselösung mit Wasser mischbar ist, dadurch gekennzeichnet, daß die Zusammensetzung aus 3 bis 5 Gew.-Teilen Natriumsesquicarbonat und 2 bis 3,5 Gew.-Teilen Stärke besteht.

2. Zusammensetzung nach Anspruch 1, dadurch gekennzeichnet, daß die Stärke und das Natriumsesquicarbonat in pulveriger, körniger oder kristalliner Form vorliegen.

3. Zusammensetzung nach Anspruch 1 oder 2, dadurch gekennzeichnet, daß das Natriumsesquicarbonat und die Stärke in einem Gewichtsverhältnis von 3:2 vorhanden sind.

4. Tapetenpapier-Ablöselösung, bestehend aus einer wäßrigen Lösung einer Zusammensetzung nach einem der vorhergehenden Ansprüche.

5. Verfahren zur Herstellung einer Ablöselösung für Tapetenpapier, bei dem 3 bis 5 Gew.-Teile Natriumsesquicarbonat und 2 bis 3,5 Gew.-Teile Stärke vermischt werden, 3 bis 6 Gew.-Teile lauwarmen Wassers langsam zugegeben und unter Bildung einer glatten Paste vermischt werden, 25 bis 40 Gew.-Teile kochenden Wassers schnell zugegeben werden und lebhaft gerührt wird.

6. Verfahren zum Ablösen einer Wandbedeckung, bei dem die Wandbedeckung mit einer heißen, frisch hergestellten Lösung gemäß Anspruch 5 angestrichen wird, der Anstrich 2 bis 3 h einziehen bzw. eindringen gelassen wird, die Wandbedeckung mit heißem Wasser durchtränkt bzw. durchfeuchtet wird und die Wandbedeckung abgelöst wird.